Europäisches Patentamt

European Patent Office

Office européen des brevets

(11) Veröffentlichungsnummer: **0 205 130 B1**

(12) **EUROPÄISCHE PATENTSCHRIFT**

(45) Veröffentlichungstag der Patentschrift: **02.01.92**

(21) Anmeldenummer: **86107781.6**

(22) Anmeldetag: **07.06.86**

(51) Int. Cl.⁵: **C01B 3/16, B01J 23/72, B01J 23/80**

(54) **Kupferhaltige Katalysatoren zur Herstellung von Wasserstoff.**

(30) Priorität: **11.06.85 DE 3520832**

(43) Veröffentlichungstag der Anmeldung:
**17.12.86 Patentblatt 86/51**

(45) Bekanntmachung des Hinweises auf die
Patenterteilung:
**02.01.92 Patentblatt 92/01**

(84) Benannte Vertragsstaaten:
**BE DE FR GB NL**

(56) Entgegenhaltungen:
**EP-A- 0 054 674          DE-A- 1 928 389**
**FR-A- 2 369 234          GB-A- 961 860**
**US-A- 3 922 337          US-A- 4 375 425**

(73) Patentinhaber: **BASF Aktiengesellschaft**
**Carl-Bosch-Strasse 38**
**W-6700 Ludwigshafen(DE)**

(72) Erfinder: **Gründler, Karl-Heinz, Dr.**
**Hockenheimer Strasse 16**
**W-6703 Limburgerhof(DE)**
Erfinder: **Irgang, Matthias, Dr.**
**Andreas-Hofer-Weg 41**
**W-6900 Heidelberg(DE)**
Erfinder: **Neth, Norbert, Dr.**
**Ostring 37**
**W-6712 Bobenheim-Roxheim(DE)**
Erfinder: **Sprague, Michael Jolyon, Dr.**
**Lachner Strasse 3**
**W-6800 Mannheim 1(DE)**
Erfinder: **Zirker, Günther, Dr.**
**Schelmenzeile 78**
**W-6700 Ludwigshafen(DE)**

**Beschreibung**

Die Erfindung betrifft kupferhaltige Katalysatoren mit besonders hoher Selektivität und Aktivität zur Herstellung von Wasserstoff.

Es ist bekannt, Wasserstoff aus Kohlenoxid-haltigen Gasen durch Umsetzung mit Wasserdampf bei erhöhten Temperaturen herzustellen. Diese als Konvertierung bezeichnete Reaktion hat große technische Bedeutung bei der Erzeugung von Synthesegasen, die bevorzugt für die Herstellung von Ammoniak und von Hydrierwasserstoff benötigt werden.

Die genannte Umsetzung wird in der Technik einstufig oder sehr oft in mehreren Stufen durchgeführt, wobei verschiedene Katalysatoren zur Anwendung kommen. Im Temperaturbereich oberhalb 300 °C werden in der sogenannten Hochtemperaturkonvertierung im allgemeinen Eisenoxid-haltige Katalysatoren eingesetzt, während im Temperaturbereich von 150 bis 300 °C bei der sogenannten Tieftemperaturkonvertierung Kupfer-haltige Katalysatoren bevorzugt werden. Solche Cu-haltigen Katalysatoren sind vielfach beschrieben.

Die Katalysatoren bestehen in der Regel aus Kupfer oder Kupferverbindungen in Kombination mit anderen Verbindungen, wobei Oxide, Hydroxide und Karbonate von Al, Zn, Cr, Mn und andere bekannt sind.

Die Kupfer-haltigen Katalysatoren haben den Nachteil, daß sie in einer unerwünschten Nebenreaktion Alkohole, besonders Methanol, bilden. Enthalten die zu konvertierenden Gase Ammoniak, was in der Technik häufig vorkommt, bilden sich daraus Amine wie Mono-, Di- und Trimethylamin. Diese Nebenproduktbildung ist umso stärker, je aktiver die Katalysatoren und je höher die Reaktortemperaturen sind und je niedriger der Dampfgehalt des Konvertierungsgases liegt. Wegen der Verwendung hochaktiver Katalysatoren und der Tendenz zur Anwendung geringer Dampfgehalte aus Energieersparnisgründen, haben sich diese Probleme im Laufe der technischen Entwicklung innerhalb der letzten Jahre verschärft.

Diese Nebenproduktbildung führt zu Ausbeuteverlusten, zu Abluft- und Abwasserverunreinigungen und bei Abtrennung der Nebenprodukte zu erhöhtem technischen Aufwand.

Aus diesen Gründen besteht großes Interesse, die Methanolbildung zu vermindern.

Aus GB-A 20 87 855 ist bekannt, durch Anwendung niedriger Reaktoreintritts-Temperaturen und Vorkonvertierung, dieses Ziel zu erreichen. Das bedeutet jedoch zusätzliche technische Maßnahmen.

Nach DD-A 204 461 kann eine Senkung der Methanolbildung durch Einsatz eines modifizierten Katalysators erreicht werden. Der Effekt ist jedoch nicht ausreichend, um das technische Problem zu lösen.

Die US-A-3 992 337 (D2) beschreibt $CO/H_2O$-Konvertierungs-Katalysatoren, die Oxide von Kupfer, Zink und Aluminium enthalten sowie eine Alkaliverbindung. Als Alkaliverbindung wird lediglich $Na_2O$ (Beispiel 3) erwähnt.

Es wurde nun gefunden, daß einerseits die unerwünschte Nebenproduktbildung bei der Konvertierung in Gegenwart von Cu-haltigen Katalysatoren die Zink, Aluminium und gegebenenfalls Chrom enthalten, in starkem Maße unterdrückt oder unterbunden und andererseits die Aktivität deutlich erhöht werden kann, wenn man Katalysatoren verwendet, die Kalium-Verbindungen enthalten.

Es wurde weiterhin gefunden, daß von den Alkaliverbindungen die Kaliumverbindungen den stärksten Effekt bei der Unterbindung der Nebenreaktionen, und Cäsiumverbindungen bei Erhöhung der Aktivität bewirken.

Für die Kalium-dotierten Katalysatoren bleibt die Konvertierungsaktivität weitgehend erhalten, während die Methanolgehalte im Prozeßkondensat stark vermindert werden.

Durch die Dotierung mit Kalium wird im Vergleich zu undotierten Katalysatoren die Methanolbildung auf etwa ein Zehntel, die in Gegenwart von Ammoniak auftretende Aminbildung auf etwa ein Viertel gesenkt. Die Selektivität für die CO-Konvertierung steigt entsprechend von 95 bis 96 % auf über 99,5 %.

Der Kalium-Gehalt zur Erreichung einer hohen Selektivität liegt vorzugsweise unterhalb von 10 Gew.-% des fertigen Katalysators, bevorzugt zwischen 0,1 und 5 Gew.-%. Er hängt von der Art der Katalysatorherstellung ab und ist für Katalysatoren, die durch gemeinsame Fällung der Komponenten hergestellt werden, meist etwas höher als bei solchen, die nur Kupfer und Zink als Fällungsprodukt enthalten.

Die Herstellung der erfindungsgemäßen Katalysatoren kann durch Ausfällung schwer- oder unlöslicher Kupferverbindungen, z.B. als Hydroxid oder Carbonat entweder einzeln oder zusammen mit den entsprechenden Zink- und/oder Aluminiumverbindungen erfolgen. Das Gemisch der schwerlöslichen Verbindungen kann abfiltriert, gewaschen - bis es von Fremdionen (z.B. Nitrat) frei ist - und bei 100 °C bis 200 °C getrocknet werden.

Das entstandene pulverförmige Produkt kann nach Beimischen eines Gleitmittels tablettiert und gegebenenfalls kalziniert werden.

Die Dotierung mit Alkaliverbindungen kann an mehreren Stellen des Herstellungsweges des Katalysators erfolgen. Bevorzugt wird die Zugabe einer löslichen Verbindung, die nach der Trocknung keine

Fremdionen hinterläßt. So kann beispielsweise die Alkalizugabe zum Fällungsprodukt erfolgen, nachdem die Mutterlauge entfernt worden ist. Sehr gute Ergebnisse werden auch mit Katalysatoren erzielt, bei denen das getrocknete und gegebenenfalls kalzinierte Fällungsprodukt mit einer Alkali-Lösung angeschlämmt und bis zum gewünschten Glühverlust getrocknet wird. Auch eine Imprägnierung des fertig tablettierten und eventuell vorkalzinierten Katalysators kann durchgeführt werden.

Zum Zweck des Vergleiches wird an verschiedenen Katalysatoren in einer Druckapparatur bei 200°C und 30 bar ein Gas folgender Zusammensetzung umgesetzt:

3 Vol.-% CO

32 Vol.-% $CO_2$

65 Vol.-% $H_2$.

Das Dampf/Trockengas-Verhältnis (D/G) ist jeweils angegeben.

```
Selektivitätsprüfung:        SV (Trockengas) = 2 000 h⁻¹,
                             D/G = 0,3


Aktivitätsprüfung:           SV (Trockengas) = 6 000 h⁻¹,
                             D/G = 0,5
```

Aktivität

Als Maß wird der Umsatz bezogen auf den thermodynamischen Gleichgewichtswert (= 100 %) angegeben.

$$U\% = \frac{CO_E - CO_R}{CO_E - CO_{Gl}} \times 100$$

```
Indices:

E    Eingangskonzentration
R    Restkonzentration
Gl   Gleichgewichtskon-
     zentration.
```

Selektivität

Aus den Analysen werden die prozentualen Anteile vom CO-Gesamtumsatz berechnet, die für die Konvertierung bzw. für die Methanolbildung verbraucht werden.

$$\text{Selektivität:} \quad S\% = \frac{CO \text{ umgesetzt für Konvertierung}}{CO \text{ Gesamtumsatz}} \times 100$$

$$\text{Methanolbildung:} \quad M\% = \frac{CO \text{ umgesetzt für MeOH}}{CO \text{ Gesamtumsatz}} \times 100$$

Aminbildung

Die Prüfung auf Aminbildung erfolgt, indem dem Konvertierungsgas (durch Ammoniakzusatz im Speisewasser) 200 ppm NH₃ zugemischt wird.

Die Prüfung erfolgt unter technisch üblichen Bedingungen:

| | |
|---|---|
| Prüfgas: | 3 % CO |
| | 15 % CO₂ |
| | 22 % N₂ |
| | 60 % H₂ |
| | 200 ppm NH₃ |
| SV (trocken): | 3.000 h⁻¹ |
| D/G: | 0,4 |
| Druck: | 30 bar |
| Temperatur: | 220° C |

Zur Beurteilung wird die Aminkonzentration (Gew. ppm Amin) im Prozeßkondensat angegeben.

Katalysator 1

In 400 Teilen Wasser werden 26 Teile Böhmitpulver (A100H) suspendiert. Dann läßt man gleichzeitig eine Mischlösung von Zinknitrat und Kupfernitrat, die 32 Teile Cu und 32 Teile Zn enthält, und eine 20 %ige Sodalösung zulaufen und hält durch eine pH-Wert-Regelung den pH-Wert auf 6.5. Die Temperatur der Fällösung wird auf 50° C gehalten. Nach Beendigung der Fällung wird filtriert, gewaschen, bei 200° C getrocknet, mit 2 % Graphit vermischt und tablettiert. Der Katalysator enthält ca. 40 % CuO.

Katalysator 2

Je 100 g des bei 200° C getrockneten Pulvers von Katalysator 1 werden mit 100 ml Lösung angemaischt.
2a Diese Lösung enthält 0,75 g K₂CO₃.
2b Diese Lösung enthält 1,5 g K₂CO₃.
2c Diese Lösung enthält 3,0 g K₂CO₃.
2d Diese Lösung enthält 2,0 g Li₂CO₃.
2e Diese Lösung enthält 1,75 g Na₂CO₃.
2f Diese Lösung enthält 1,20 g CsOH.
Die entstandene Paste wird getrocknet, mit 2 % Graphit vermischt und tablettiert.

Katalysator 3

300 Teile Wasser werden vorgelegt und auf 50° C erwärmt. Dann pumpt man gleichzeitig eine Mischlösung von Metallnitraten und eine 20 %ige Sodalösung bei pH = 6,5 und T = 50° C zu.
Die Mischlösung enthält folgende Anteile:
3a 32 Teile Cu, 16 Teile Zn, 18 Teile Al, 5 Teile Mg
3b 32 Teile Cu, 16 Teile Zn, 18 Teile Al, 5 Teile Ca
3c 32 Teile Cu, 16 Teile Zn, 18 Teile Al, 5 Teile Ba.
Nach der Fällung wird filtriert, gewaschen, getrocknet, mit 2 % Graphit vermischt und tablettiert. Ein Teil der Erdalkalien wird ausgewaschen; die Analysen sind in der folgenden Tabelle angegben.

Katalysator 4

Man verwendet je 100 g Tabletten des Vergleichskatalysators 1. Ihre Porosität beträgt 35 ml/100 g.
4a In 35 ml destilliertem Wasser werden 3,75 g Bariumnitrat gelöst.
4b in 35 ml destilliertem Wasser werden 10 g Magnesiumformiat gelöst.
Mit diesen Lösungen werden in einer rotierenden Trommel die Tabletten getränkt; anschließend werden sie getrocknet und bei 300° C kalziniert.
Die Prüfung der Katalysatoren wird in einer Druckapparatur, die mit Gaschromatograph und Ultrarot-Analysengerät ausgestattet ist, durchgeführt.
Die Prüfungsbedingungen und die Auswertung sind oben beschrieben. Die Ergebnisse der Selektivitäts- und Aktivitätsprüfung sind in der folgenden Tabelle zusammengefaßt:

Tabelle

| Katalysator | Dotierung (Gew.-%) | Anteil der MeOH-Bldg. M (%) | Selektivität d. Konvert. S (%) | Umsatz SV = 2 000h$^{-1}$ U (%) | Umsatz V = 6 000$^{-1}$ U (%) |
|---|---|---|---|---|---|
| 1 | keine | 4,14 | 95,85 | 100 | 91 |
| 2a | 0,49 % K$_2$O | 1,49 | 98,51 | 100 | 90 |
| 2b | 0,97 % K$_2$O | 0,49 | 99,51 | 99 | 87 |
| 2c | 1,93 % K$_2$O | 0,38 | 99,61 | 99 | 88 |
| 2d | 0,80 % Li$_2$O | 1,16 | 98,84 | 93 | 75 |
| 2e | 1,0 % Na$_2$O | 0,45 | 99,55 | 84 | 71 |
| 2f | 1,1 % Cs$_2$O | 4,00 | 96,00 | 100 | 100 |
| 3a | 7,1 % MgO | 1,08 | 98,92 | 87 | 69 |
| 3b | 6,7 % CaO | 2,18 | 97,87 | 100 | 90 |
| 3c | 4,9 % BaO | 0,85 | 99,14 | 94 | 72 |
| 4a | 2,2 % BaO | 1,34 | 98,66 | 93 | 86 |
| 4b | 3,3 % MgO | 2,38 | 97,61 | 100 | 86 |

Bei Verwendung des Vergleichskatalysators (Katalysator 1) entstehen 233 Gew.-ppm Amine, bei Verwendung von Katalysator 2c 72 Gew.-ppm Amine im Kondensat.

**Patentansprüche**

1. Kupferhaltige Katalysatoren für die Herstellung von Wasserstoff durch Umsetzung kohlenmonoxidhaltiger Gase mit Wasserdampf, bei Temperaturen von 150 bis 300 ° C, die Zink, Aluminium und gegebenenfalls Chrom enthalten, dadurch gekennzeichnet, daß der Katalysator eine Kaliumverbindung enthält.

2. Verfahren zur Herstellung der Katalysatoren gemäß Anspruch 1, dadurch gekennzeichnet, daß lösliche Kalium-Verbindungen auf das Gemisch der Hauptkomponenten aufgebracht, dieses getrocknet und tablettiert wird, oder eine Tränkung der Tabletten durchgeführt wird.

**Claims**

1. A catalyst for producing hydrogen by reacting a gas which contains carbon monoxide with steam at from 150 to 300 ° C, containing a potassium compound in addition to copper, zinc, aluminum and optionally chromium.

2. A process for preparing a catalyst as claimed in claim 1, which comprises applying a soluble potassium compound to a mixture of the main components, drying and tableting, or impregnating the tablets.

**Revendications**

1. Catalyseurs contenant du cuivre pour la préparation de l'hydrogène par réaction de gaz contenant du monoxyde de carbone avec de la vapeur d'eau, à des températures de 150 à 300 ° C, ces catalyseurs contenant du zinc, de l'aluminium et éventuellement du chrome, caractérisés en ce que le catalyseur contient un composé du potassium.

2. Procédé de préparation des catalyseurs suivant la revendication 1, caractérisé en ce qu'on applique des composés du potassium solubles sur le mélange des composants principaux, en ce que l'on sèche le mélange et le transforme en comprimés, ou bien en ce que l'on effectue une imprégnation des comprimés.